# FASCICULE DE BREVET EUROPEEN

(11) **EP 3 997 373 B1**
(45) Date de publication et mention de la délivrance du brevet: **27.09.2023**
(21) Numéro de dépôt: 20737463.8
(22) Date de dépôt: 09.07.2020
(51) Int. Cl.: F16L 23/00, F16L 23/08, E21D 9/13, F16L 1/036, F16L 1/06, E21D 9/00

(54) **CONDUITE DE MARINAGE POUR TUNNELIER**
ABRAUMROHR FÜR TUNNELBOHRMASCHINE
SPOIL PIPE FOR TUNNEL BORING MACHINE

(30) Priorité: 09.07.2019 FR 1907675
(43) Date de publication de la demande: 18.05.2022
(73) Titulaire: Bouygues Travaux Publics, 78280 Guyancourt (FR)
(72) Inventeur: PESENTI, Hervé, 01120 Montluel (FR)
(74) Mandataire: Regimbeau
(86) Numéro de dépôt international: PCT/EP2020/069421
(87) Numéro de publication internationale: WO 2021/005170

(56) Documents cités:
- EP-A1- 1 281 835
- EP-A1- 2 112 414
- DE-A1- 3 524 074
- DE-A1-102015 110 017
- GB-A- 1 562 054
- US-B2- 8 211 518

## Description

### DOMAINE DE L'INVENTION

L'invention concerne de manière générale le forage d'un tunnel, et plus particulièrement l'évacuation des déblais gérés par un tel forage, notamment dans le cas d'un tunnelier à pression de boue.

### ETAT DE LA TECHNIQUE

On connaît des machines de creusement de tunnels, appelées tunneliers, qui comportent une structure mobile de grandes dimensions consistant en une grande usine mobile à l'avant de laquelle est disposé un bouclier ayant une section compatible avec la future section en adéquation avec la forme définitive du tunnel (tunnel de section circulaire, bilobé, etc.)

La partie antérieure du bouclier qui vient en contact avec le front de taille pour réaliser la découpe de la formation géologique traversée par le tunnel comporte une roue de coupe supportant des outils de travail qui est entraînée en rotation à une vitesse variable et qui est couplée à une poussée que l'on adapte à la nature du terrain à creuser.

La roue de coupe travaille en pression. Elle est montée à l'avant d'une chambre, dite chambre d'abattage, selon le sens de déplacement du tunnelier. La partie arrière du tunnelier, dénommée train suiveur, comprend, outre différents appareils permettant la circulation des fluides entre le tunnel et la surface (sortie du tunnel), l'ensemble des dispositifs de pilotage, de sécurité et de mise en place de voussoirs constitutifs du tunnel. De la boue (« slurry » en anglais) est injectée sous pression à l'avant du front de taille à partir de la chambre d'abattage. Cette boue a pour fonction de lubrifier la roue de coupe, d'assurer la stabilité des parois de l'excavation et, lors de son trajet de retour jusqu'à la surface, de fluidifier le transport des matériaux (le marin) issus de l'excavation.

De manière connue en soi, le marin est transporté de la roue de coupe à la surface par une ou plusieurs conduites de marinage. Chaque conduite de marinage comprend une canalisation de sortie, raccordée à la tête de coupe du tunnelier, une section aval, fixe et rigide, raccordée à une station de traitement des boues et un tuyau flexible raccordant la canalisation de sortie et la section aval. Pour permettre l'avancement du tunnelier, le tuyau flexible est plié de sorte à créer un jeu entre la canalisation et la section aval, puis se déplie progressivement au cours de l'avancement du tunnelier jusqu'à être sensiblement allongé. Arrivée en bout de course, le tuyau flexible est déconnecté et replié. Une section supplémentaire de conduite, rigide, est ensuite rapportée et insérée entre le tuyau flexible et la section aval. La nouvelle conduite ainsi raccordée, le tunnelier peut poursuivre son avancée.

Toutefois, le montage de la section supplémentaire est long et nécessite une manutention lourde. En effet, la section aval doit être séparée de la canalisation de sortie en démontant un collier de serrage, puis une section supplémentaire doit être amenée et positionnée correctement par rapport à la section aval et la canalisation de sortie avant de monter un premier collier de serrage entre cette section supplémentaire et la canalisation de sortie et un deuxième collier de serrage entre la section supplémentaire et la section aval d'autre part. Le montage des colliers implique d'aligner correctement la conduite supplémentaire avec la canalisation de sortie et avec la section avant, en tenant simultanément un collier de serrage, des boulons et une clé à choc. L'opération de raccordement nécessite en outre que les opérateurs supportent et maintiennent en position les sections de conduite en vis-à-vis pendant le serrage de chaque collier, qui est très lourd, et la fixation des boulons, ce qui est difficile compte-tenu de l'encombrement des sections de conduite et leur poids. Par ailleurs, cette opération est délicate puisqu'il est nécessaire que tous ces éléments soient assemblés précisément pour garantir le montage des colliers. En cas d'échec, ces différentes étapes doivent être réitérées.

EP 1281835 A1 divulgue une conduite de marinage pour un tunnelier.

### EXPOSE DE L'INVENTION

Un but de l'invention est de proposer une solution pour le montage d'une section de conduite de marinage qui soit plus simple, plus facile à manipuler pour les opérateurs, plus sure et qui garantisse le bon positionnement des différentes sections de la conduite.

Il est à cet effet proposé, selon un premier aspect de l'invention, une conduite de marinage pour un tunnelier selon la revendication 1.

Certaines caractéristiques préférées mais non limitatives du connecteur décrit ci-dessus sont les suivantes, prises individuellement ou en combinaison :
- le raccord comprend en outre, au niveau de la deuxième extrémité, des moyens de centrage de la section supplémentaire de conduite aire par rapport au raccord.
- les moyens de centrage comprennent un guide de centrage conique.
- le connecteur comprend en outre un actionneur configuré pour ouvrir et/ou fermer le dispositif de serrage. Et/ou
- l'actionneur comprend au moins un vérin, par exemple deux vérins.

Selon un deuxième aspect, l'invention propose un procédé de montage d'une telle conduite de marinage pour un tunnelier comprenant les étapes suivantes :
S2 : amener une section supplémentaire de conduite,
S3 : aligner la section supplémentaire de conduite par rapport au connecteur puis insérer ladite section supplémentaire de conduite dans la deuxième extrémité du raccord dudit connecteur,
S4 : fermer le dispositif de serrage sur la section supplémentaire de conduite afin de la bloquer par rapport au raccord.

Certaines caractéristiques préférées mais non limitatives du procédé de montage décrit ci-dessus sont les suivantes, prises individuellement ou en combinaison :
- l'étape S3 d'alignement comprend une sous-étape de guidage de la section supplémentaire de conduite à l'aide de moyens de centrage s'étendant au niveau de la deuxième extrémité du raccord. Et/ou
- l'étape S2 comprend une sous-étape de mise en position de la section supplémentaire de conduite à l'aide d'un système de positionnement de ladite section supplémentaire de conduite par rapport au raccord.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
Les figures 1a à 1d illustrent le montage d'une section supplémentaire d'une conduite de marinage lors de l'avancée d'un tunnelier conforme à un mode de réalisation de l'invention.

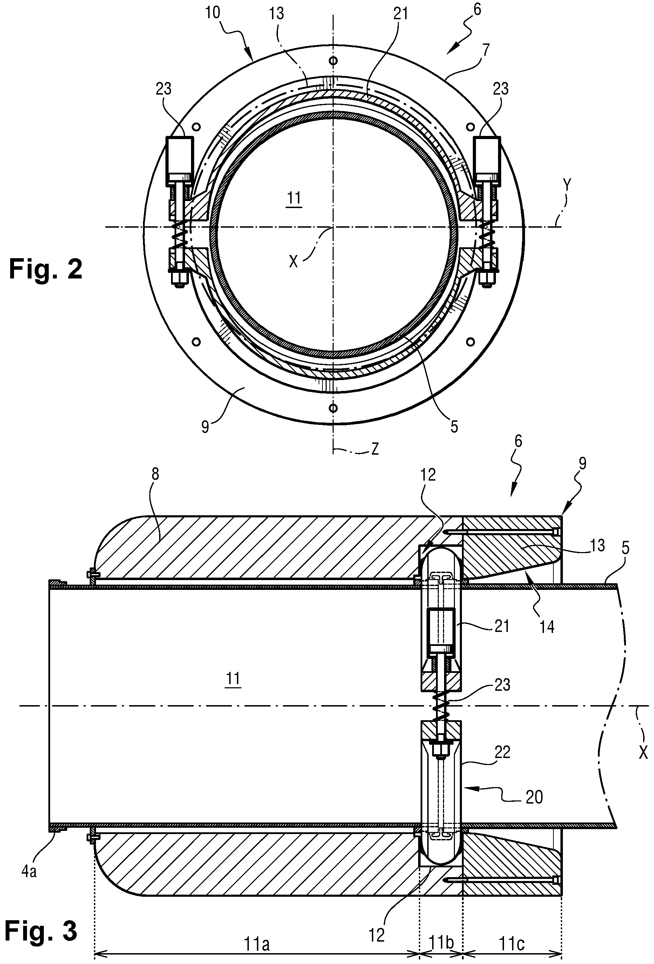

La figure 2 est une vue en coupe suivant un plan normal à l'axe X d'un exemple de réalisation d'un connecteur pour une conduite de marinage d'un tunnelier conforme à un mode de réalisation de l'invention.
La figure 3 est une vue en coupe suivant un plan normal à l'axe Y et comprenant l'axe X du connecteur de la figure 2.

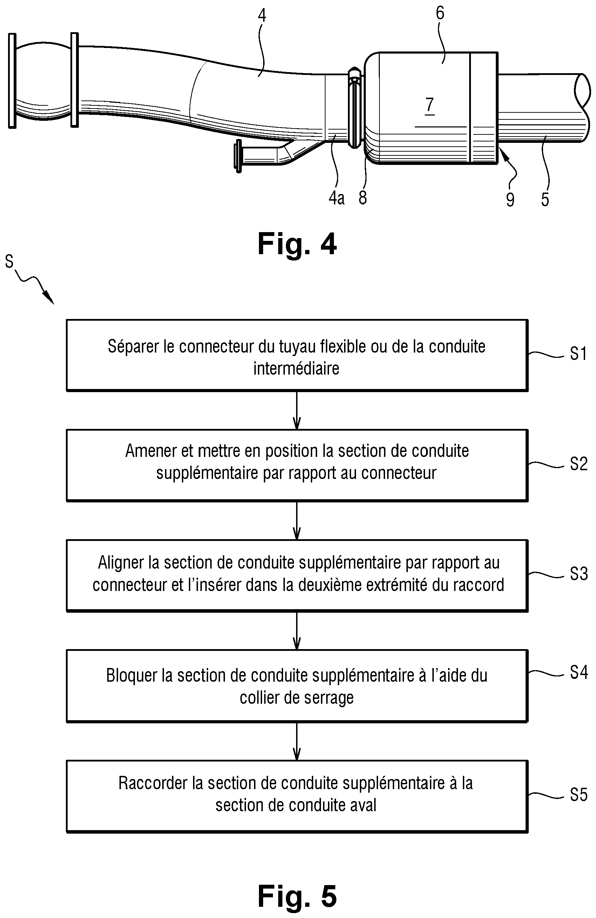

La figure 4 est une vue de côté d'un exemple de réalisation d'une conduite de marinage d'un tunnelier conforme à un mode de réalisation de l'invention.
La figure 5 est un organigramme d'étapes d'un exemple de réalisation d'un procédé de montage d'une conduite de marinage d'un tunnelier selon un mode de réalisation de l'invention.

Sur l'ensemble des figures, les éléments similaires portent des références identiques.

### DESCRIPTION DETAILLEE DE L'INVENTION

De manière classique, un tunnelier comprend, en partie avant, un bouclier ayant une section sensiblement circulaire dont le diamètre correspond au diamètre du tunnel dont on réalise le creusement. Le bouclier loge une roue de coupe qui vient en contact avec le front de taille pour creuser le tunnel et qui est mobile en rotation autour d'un axe.

Le tunnelier comporte en outre un train suiveur s'étendant derrière le bouclier et qui avance en même temps que la roue de coupe lors du creusement du tunnel.

De manière connue en soi, la roue de coupe est montée à l'avant d'une chambre d'abattage. De la boue est injectée sous pression à l'avant du front d'attaque à partir de la chambre d'abattage, et le marin est transporté de la roue de coupe à la surface par une ou plusieurs conduites de marinage 1.

Chaque conduite de marinage 1 comprend une canalisation de sortie 2 raccordée à la tête de coupe du tunnelier (au niveau de la chambre d'abattage), une section de conduite aval 3 raccordée à une station de traitement des boues et un tuyau flexible 4 raccordant la canalisation de sortie 2 et la section aval 3.

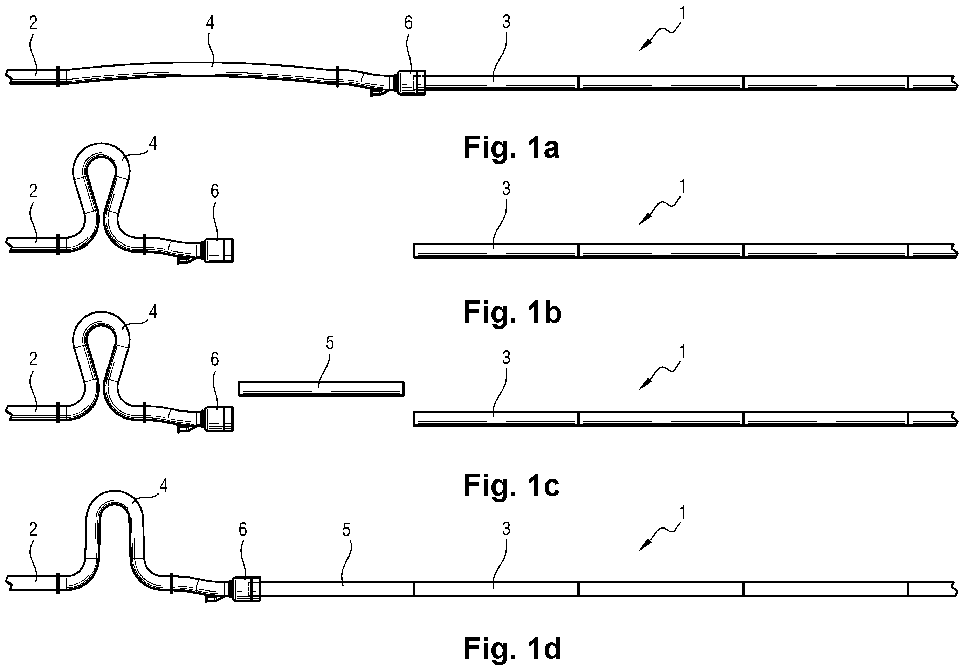

Les figures 1a à 1d illustrent le montage d'une section supplémentaire 5 d'une conduite de marinage 1 lors de l'avancée d'un tunnelier.

Sur la figure 1a, le tuyau flexible 4 est tendu entre la canalisation de sortie 2 et la section aval 3 de la conduite de marinage 1. Il n'y a donc plus de jeu suffisant pour permettre au tunnelier de poursuivre son avancée, la section aval 3 étant fixe.

Le tuyau flexible 4 est alors séparé de la section aval 3 puis plié de sorte à recréer un jeu (figure 1b).

Une section supplémentaire 5 de conduite est ensuite rapportée entre le tuyau flexible 4 et la section aval 3 de la conduite (figure 1c).

La section de conduite aval 3 et la section supplémentaire 5 sont rigides.

Enfin, la section supplémentaire 5 est raccordée au tuyau flexible 4 et à la section aval 3, le cas échéant via une section intermédiaire 4a de conduite, de sorte à remettre la chambre d'abattage et la station de traitement des boues en communication fluidique. Le tunnelier peut ensuite reprendre le creusement et avancer.

Afin de simplifier le montage de la section supplémentaire 5 sur le tuyau flexible de la conduite de marinage 1, l'invention propose un connecteur 6 comprenant :
- un raccord 7 présentant une première extrémité 8 configurée pour être rapportée et fixée sur le tuyau flexible 4 et une deuxième extrémité 9 configurée pour être montée sur une section supplémentaire 5 de conduite et
- un dispositif de serrage 20, monté dans le raccord 7 et configuré pour bloquer la section supplémentaire 5 par rapport au raccord 7. Dans une forme de réalisation, le dispositif de serrage 20 permet en outre de réaliser l'étanchéité entre la section supplémentaire 5 et le raccord 7. Par exemple, le dispositif de serrage 20 peut comprendre un collier de serrage, ou en variante tout système de verrouillage et le cas échéant d'étanchéité capable de bloquer la section supplémentaire 5 en position par rapport au raccord 7.

Un tel connecteur 6 permet ainsi de simplifier les manipulations de la section supplémentaire 5 puisqu'elle supprime l'étape de montage d'un nouveau collier sur l'extrémité de la section supplémentaire 5 qui est raccordée au tuyau flexible 4. Comme nous le verrons par la suite, l'utilisation d'un raccord 7 permet en outre de simplifier et d'améliorer l'alignement de la section supplémentaire 5 avec le tuyau flexible 4 lors de leur fixation.

Dans ce qui suit, on désignera par « axe longitudinal X » un axe central du connecteur 6, typiquement un axe de symétrie lorsque le connecteur 6 est globalement cylindrique de révolution. Lorsque le connecteur 6 est monté sur la section supplémentaire 5, l'axe X est sensiblement confondu avec l'axe de révolution de ladite section supplémentaire 5. On désignera par « axe vertical Z » un axe compris dans le plan normal à l'axe longitudinal X et qui est sensiblement normal au sol sur lequel est posé le connecteur 6 et par « axe transversal Y » un axe perpendiculaire à l'axe vertical Z et à l'axe longitudinal X.

Le raccord 7 est configuré pour être monté, directement ou indirectement, sur le tuyau flexible 4. Dans un mode de réalisation, le tuyau flexible 4 est fixé sur une section intermédiaire 4a, rigide, qui est elle-même fixée sur la première extrémité 8 du raccord 7.

Dans ce qui suit, l'invention sera décrite dans le cas où le raccord 7 est monté sur le tuyau flexible 4 par l'intermédiaire d'une section intermédiaire 4a, sans que cela ne soit limitatif.

Le raccord 7 comprend une enveloppe 10 qui délimite une chambre 11 configurée pour recevoir un bout de la section supplémentaire 5. La chambre 11 est traversante entre la première extrémité 8 et la deuxième extrémité 9 afin de permettre le passage du marin.

La chambre 11 présente une première portion 11a, configurée pour recevoir la section intermédiaire 4a, une deuxième portion 11b configurée pour recevoir le dispositif de serrage 20 et une troisième portion 11c configurée pour recevoir la section supplémentaire 5.

La première portion 11a débouche sur la première extrémité 8 et est globalement cylindrique de révolution. Elle présente un diamètre sensiblement égal au diamètre externe de la section intermédiaire 4a. La section intermédiaire 4a est ensuite fixée en position dans la chambre 11 à l'aide d'un système de fixation tel qu'un collier.

De même, la troisième portion 11c débouche sur la deuxième extrémité 9 et est globalement cylindrique de révolution et présente un diamètre à l'interface avec la deuxième portion 11b sensiblement égal au diamètre externe de la section supplémentaire 5. Le diamètre de la troisième portion 11c peut être sensiblement constant sur toute sa longueur suivant l'axe X ou, en variante, comme nous le verrons par la suite, décroissant de la deuxième extrémité 9 vers la deuxième portion 11b (centrage).

La deuxième portion 11b s'étend entre la première et la troisième portion 11a, 11c et reçoit le dispositif de serrage 20. Le diamètre de la deuxième portion 11b est supérieur à celui de la première portion 11a et de la troisième portion 11c (au moins à l'interface avec la troisième portion 11c) afin de former un logement 12 pour le dispositif de serrage 20. Le dispositif de serrage 20 est donc bloqué dans le logement 12 et vient en butée axiale suivant l'axe X et en butée radiale suivant les axes Y et Z (lorsque le dispositif de serrage 20 est ouvert) contre l'enveloppe 10 du raccord 7.

Dans une forme de réalisation, le dispositif de serrage 20 comprend un collier de serrage 20 comportant deux demi-colliers 21, 22 configurés pour être mis en prise afin de bloquer la section supplémentaire 5 par rapport au raccord 7. L'ouverture et la fermeture (mise en prise) du dispositif de serrage 20, typiquement des deux demi-colliers 21, 22 peuvent être manuelles ou en variante automatisées. Par exemple, dans le cas d'un dispositif de serrage 20 comprenant un collier de serrage, le connecteur 6 peut en outre comprendre un actionneur 23 logé dans la chambre 11 et configuré pour mettre en prise et maintenir en position les demi-colliers 21, 22 ou, à l'inverse, les séparer. L'actionneur 23 peut notamment comprendre un vérin, par exemple deux vérins placés chacun de part et d'autre des demi-colliers 21, 22.

Dans une forme de réalisation, le connecteur 6 comprend en outre des moyens de centrage 13 de la section supplémentaire 5 par rapport au connecteur 6 et, par conséquent, par rapport à la section intermédiaire 4a et au tuyau flexible 4.

Les moyens de centrage 13 s'étendent au niveau de la deuxième extrémité 9 du raccord 7. Dans une forme de réalisation, les moyens de centrage 13 délimitent la troisième portion 11c de la chambre 11.

Les moyens de centrage 13 peuvent comprendre un guide de centrage conique. Le guide 13 comprend à cet effet une paroi 14 sensiblement cylindrique de révolution présentant une face interne de forme conique de sorte que son diamètre au niveau de l'entrée de la chambre 11 (au niveau de la deuxième extrémité 9 du raccord 7) est plus grand que son diamètre à l'interface avec la deuxième portion 11b. De plus, le diamètre interne du guide 13 au niveau de son interface avec la deuxième portion 11b de la chambre 11 est sensiblement égal au diamètre externe de la section supplémentaire 5. La paroi 14 interne permet ainsi de guider la section supplémentaire 5 jusqu'à la deuxième extrémité 9 du raccord 7 et de la centrer progressivement.

Le procédé S de montage de la section supplémentaire 5 de la conduite de marinage 1 sur la section intermédiaire 4a, peut alors être réalisé conformément aux étapes suivantes.

Au cours d'une étape S1, le connecteur 6 est séparé de la section aval 3 de la conduite de marinage et le tuyau flexible 4 est replié de sorte à ménager un jeu entre la canalisation de sortie et la conduite de marinage (Fig. 1b). Pour cela, le dispositif de serrage 20 est ouvert, manuellement ou de façon automatisée. Par exemple, dans le cas d'un collier de serrage 20, les demi-colliers 21, 22 du collier de serrage 20 sont séparés, le cas échéant à l'aide de l'actionneur 23. Le pliage du tuyau flexible 4 et l'ouverture du collier de serrage 20 ont alors pour effet de déloger la section aval 3 de la première portion 11a de la chambre 11 du raccord 7.

De préférence, le dispositif de serrage 20 reste logé dans le connecteur 6, typiquement dans le logement 12. En particulier, le dispositif de serrage 20 ne reste pas monté sur la section aval 3 de la conduite de marinage 1 après sa séparation du connecteur 6. Cela permet en effet d'éviter aux compagnons de démonter le dispositif de serrage 20 de la section aval 3 puis de le remonter sur la section supplémentaire 5, simplifiant ainsi la manutention.

De manière conventionnelle, le tuyau flexible 4, la section intermédiaire 4a et par conséquent le connecteur 6 sont placés sur une embase mobile afin de les déplacer lors du montage de la section supplémentaire 5.

Le connecteur 6 est alors uniquement fixé à la section intermédiaire 4.

Au cours d'une étape S2 (Fig. 1c), la section supplémentaire 5 est amenée et mise en position entre le connecteur 6 et la section aval 3, qui est fixe et rigide. En particulier, la section supplémentaire 5 est positionnée suivant les axes X, Y et Z par rapport au raccord 7 et à la section intermédiaire 4a.

Pour cela, la section supplémentaire 5 peut notamment être déplacée et positionnée à l'aide d'un palan à chaîne.

En variante, un palan à chaîne peut placer la section supplémentaire 5 sur un système de positionnement comprenant un support mobile en translation suivant l'axe longitudinal X et/ou l'axe vertical Z et/ou l'axe transversal Y afin de permettre un premier réglage de la position de la section supplémentaire 5 par rapport au connecteur 6 suivant ces axes X, Y et/ou Z. Le support peut par exemple être déplacé par un ou plusieurs vérins suivants ces axes X, Y et/ou Z.

Ce premier réglage présente l'avantage de faciliter les opérations de manutention en supprimant l'utilisation du palan à chaîne pour la mise en position.

Au cours d'une étape S3 (Fig. 1d), la section supplémentaire 5 est alignée par rapport au raccord 7 du connecteur 6 puis insérée dans la deuxième extrémité 9 dudit raccord 7.

Optionnellement, le procédé S l'alignement de la section supplémentaire 5 par rapport au raccord 7 peut être amélioré grâce aux moyens de centrage 13. En particulier, les moyens de centrage 13, et en particulier la paroi 14 interne dans le cas d'un guide de centrage conique, assistent le compagnon lors de l'insertion de la section supplémentaire 5 dans la deuxième extrémité 9 du raccord 7 en alignant progressivement la section supplémentaire 5 avec l'axe X au fur et à mesure de son insertion le long de l'axe X.

Au cours d'une étape S4, le dispositif de serrage 20 est fermé afin de bloquer la section de conduite supplémentaire 5 par rapport au raccord 7, et donc par rapport à la section intermédiaire 4a et au tuyau flexible 4. Par exemple, dans le cas d'un collier de serrage 20, les demi-colliers 21, 22 de serrage sont mis en prise et serrés sur la section de conduite supplémentaire 5 et le raccord 7.

Au cours d'une étape S5, la section supplémentaire 5 peut être raccordée à la section aval 3. Cette étape S5 étant conventionnelle elle ne sera pas davantage détaillée ici.

On comprendra bien entendu que l'étape S5 peut être mise en oeuvre à tout moment entre la séparation de la conduite aval (étape S1) du raccord 7 et le blocage de la section supplémentaire 5 dans le connecteur 6 (étape S4).

## Revendications

1. Conduite de marinage (1) pour un tunnelier comprenant :
- une canalisation de sortie (2), raccordée à une tête de coupe du tunnelier,
- une première section de conduite (3),
- un tuyau flexible (4), raccordant la canalisation de sortie (2) et la section de conduite (3),
**caractérisée par** un connecteur (6) comprenant :
- un raccord (7) présentant une première extrémité (8) rapportée et fixée sur le tuyau flexible (4) et une deuxième extrémité (9) configurée pour être montée sur une section supplémentaire de conduite (5) et
- un dispositif de serrage (20), monté dans le raccord (7) et configuré pour bloquer la section supplémentaire de conduite (5) par rapport au raccord (7).

2. Conduite de marinage (1) selon la revendication 1, dans laquelle le raccord (7) comprend en outre, au niveau de la deuxième extrémité (9), des moyens de centrage (13) de la section supplémentaire de conduite (5) aire par rapport au raccord (7).

3. Conduite de marinage (1) selon la revendication 2, dans laquelle les moyens de centrage (13) comprennent un guide de centrage conique.

4. Conduite de marinage (1) selon l'une des revendications 1 à 3, comprenant en outre un actionneur (23) configuré pour ouvrir et/ou fermer le dispositif de serrage (20).

5. Conduite de marinage (1) selon la revendication 4, dans laquelle l'actionneur (23) comprend au moins un vérin, par exemple deux vérins.

6. Procédé de montage (S) d'une conduite de marinage (1) pour un tunnelier selon l'une des revendications 1 à 5, ledit procédé de montage (S) comprenant les étapes suivantes :
S2 : amener une section supplémentaire de conduite (5),
S3 : aligner la section supplémentaire de conduite (5) par rapport au connecteur (6) puis insérer ladite section supplémentaire de conduite (5) dans la deuxième extrémité (9) du raccord (7) dudit connecteur (6),
S4 : fermer le dispositif de serrage (20) sur la section supplémentaire de conduite (5) afin de la bloquer par rapport au raccord (7).

7. Procédé de montage selon la revendication 6, dans lequel, l'étape S3 d'alignement comprend une sous-étape de guidage de la section supplémentaire de conduite (5) à l'aide de moyens de centrage (13) s'étendant au niveau de la deuxième extrémité (9) du raccord (7).

8. Procédé de montage selon l'une des revendications 6 ou 7, dans lequel l'étape S2 comprend une sous-étape de mise en position de la section supplémentaire de conduite (5) à l'aide d'un système de positionnement de ladite section supplémentaire de conduite (5) par rapport au raccord (7).

## Patentansprüche

1. Marinierleitung (1) für eine Tunnelbohrmaschine, umfassend :
- einer Auslassleitung (2), die mit einem Schneidkopf der Tunnelbohrmaschine verbunden ist,
- einem ersten Leitungsabschnitt (3),
- einem flexiblen Schlauch (4), der die Auslassleitung (2) und den Leitungsabschnitt (3) verbindet,
**gekennzeichnet durch** ein Verbinder (6) mit:
- ein Verbindungsstück (7) mit einem ersten Ende (8), das an dem flexiblen Schlauch (4) angebracht und befestigt ist, und einem zweiten Ende (9), das so konfiguriert ist, dass es an einem weiteren Leitungsabschnitt (5) angebracht werden kann, und
- eine Klemmvorrichtung (20), die in dem Verbindungsstück (7) angebracht und so konfiguriert ist, dass sie den zusätzlichen Leitungsabschnitt (5) in Bezug auf das Verbindungsstück (7) festklemmt.

2. Marinierleitung (1) nach Anspruch 1, wobei das Verbindungsstück (7) am zweiten Ende (9) außerdem Mittel (13) zum Zentrieren des zusätzlichen Leitungsabschnitts (5) aire in Bezug auf das Verbindungsstück (7) umfasst.

3. Marinierleitung (1) nach Anspruch 2, wobei die Zentriermittel (13) eine konische Zentrierführung umfassen.

4. Marinierleitung (1) nach einem der Ansprüche 1 bis 3, ferner umfassend einen Aktuator (23), der zum Öffnen und/oder Schließen der Klemmvorrichtung (20) ausgebildet ist.

5. Marinierleitung (1) nach Anspruch 4, wobei der Aktuator (23) mindestens einen Zylinder, z. B. zwei Zylinder, umfasst.

6. Verfahren zur Montage (S) einer Marinierleitung (1) für eine Tunnelbohrmaschine nach einem der Ansprüche 1 bis 5, wobei das Montageverfahren (S) die folgenden Schritte umfasst:
S2 : Zuführen eines zusätzlichen Leitungsabschnitts (5),
S3 : Ausrichten des zusätzlichen Leitungsabschnitts (5) in Bezug auf dem Verbinder (6) und dann Einführen des zusätzlichen Leitungsabschnitts (5) in das zweite Ende (9) des Anschlusses (7) des Verbinders (6),
S4 : Schließen der Klemmvorrichtung (20) über dem zusätzlichen Leitungsabschnitt (5), um ihn in Bezug auf das Verbindungsstück (7) zu arretieren.

7. Montageverfahren nach Anspruch 6, wobei der Schritt S3 des Ausrichtens einen Unterschritt des Führens des zusätzlichen Leitungsabschnitts (5) mit Hilfe von Zentriermitteln (13) umfasst, die sich an dem zweiten Ende (9) des Fittings (7) erstrecken.

8. Montageverfahren nach einem der Ansprüche 6 oder 7, wobei der Schritt S2 einen Unterschritt des Positionierens des zusätzlichen Leitungsabschnitts (5) mit Hilfe eines Systems zum Positionieren des zusätzlichen Leitungsabschnitts (5) relativ zum Fitting (7) umfasst.

## Claims

1. A mucking duct (1) for a tunnel boring machine comprising:
- an outlet line (2), connected to a cutting head of the tunnel boring machine,
- a first pipe section (3),
- a flexible pipe (4), connecting the outlet line (2) and the pipe section (3),
**characterised by** a connector (6) comprising :
- a fitting (7) having a first end (8) attached and fixed to the flexible pipe (4) and a second end (9) configured to be mounted on an additional section of pipe (5), and
- a clamping device (20), mounted in the fitting (7) and configured to lock the additional section of pipe (5) relative to the fitting (7).

2. A mucking duct (1) according to claim 1, wherein the fitting (7) further comprises, at the second end (9), means (13) for centring the additional section of pipe (5) relative to the fitting (7).

3. A mucking duct (1) according to claim 2, wherein the centring means (13) comprise a conical centring guide.

4. A mucking duct (1) according to one of claims 1 to 3, further comprising an actuator (23) configured to open and/or close the clamping device (20).

5. A mucking duct (1) according to claim 4, wherein the actuator (23) comprises at least one cylinder, for example two cylinders.

6. A method of mounting (S) a mucking duct (1) for a tunnel boring machine according to any of claims 1 to 5, said mounting method (S) comprising the following steps:
S2 : feeding an additional section of pipe (5),
S3 : aligning the additional section of pipe (5) with respect to the connector (6) and then inserting said additional section of pipe (5) into the second end (9) of the fitting (7) of said connector (6),
S4 : closing the clamping device (20) on the additional pipe section (5) in order to lock it relative to the fitting (7).

7. A method of mounting as claimed in claim 6, wherein the alignment step S3 comprises a sub-step of guiding the additional pipe section (5) by means of centering means (13) extending at the second end (9) of the fitting (7).

8. A method of mounting according to one of claims 6 or 7, wherein step S2 comprises a sub-step of positioning the additional pipe section (5) using a system for positioning said additional pipe section (5) relative to the fitting (7).
